(19) **Europäisches Patentamt**
**European Patent Office**
**Office européen des brevets**

(11) **EP 3 956 701 B1**

(12) **EUROPÄISCHE PATENTSCHRIFT**

(45) Veröffentlichungstag und Bekanntmachung des Hinweises auf die Patenterteilung:
**01.10.2025 Patentblatt 2025/40**

(21) Anmeldenummer: **20721464.4**

(22) Anmeldetag: **16.04.2020**

(51) Internationale Patentklassifikation (IPC):
**G02B 5/18** (2006.01)     **B23K 26/064** (2014.01)
**B23K 26/073** (2006.01)     **G02B 27/09** (2006.01)

(52) Gemeinsame Patentklassifikation (CPC):
**G02B 27/0944; B23K 26/0648; B23K 26/0652; B23K 26/073; G02B 5/1814; G02B 27/095; G02B 27/0988**

(86) Internationale Anmeldenummer:
**PCT/EP2020/060704**

(87) Internationale Veröffentlichungsnummer:
**WO 2020/212487 (22.10.2020 Gazette 2020/43)**

(54) **ORTSFREQUENZFILTEREINRICHTUNG ZUR VERWENDUNG MIT EINEM LASERSTRAHL, ORTSFREQUENZFILTERANORDNUNG MIT EINER SOLCHEN ORTSFREQUENZFILTEREINRICHTUNG UND VERFAHREN ZUR ORTSFREQUENZFILTERUNG EINES LASERSTRAHLS**

SPATIAL FREQUENCY FILTER DEVICE FOR USE WITH A LASER BEAM, SPATIAL FREQUENCY FILTER ASSEMBLY HAVING SUCH A SPATIAL FREQUENCY FILTER DEVICE, AND METHOD FOR SPATIAL FREQUENCY FILTERING OF A LASER BEAM

DISPOSITIF DE FILTRAGE DE FRÉQUENCE LOCAL DESTINÉ À ÊTRE UTILISÉ AVEC UN FAISCEAU LASER, ENSEMBLE DE FILTRAGE DE FRÉQUENCE LOCAL AVEC UN TEL DISPOSITIF DE FILTRAGE DE FRÉQUENCE LOCAL, ET PROCÉDÉ DE FILTRAGE DE FRÉQUENCE LOCAL D'UN FAISCEAU LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2019 DE 102019205642**

(43) Veröffentlichungstag der Anmeldung:
**23.02.2022 Patentblatt 2022/08**

(73) Patentinhaber: **TRUMPF Laser- und Systemtechnik SE**
**71254 Ditzingen (DE)**

(72) Erfinder:
- **KUMKAR, Malte**
  **99425 Weimar (DE)**
- **DÖRR, Stefan**
  **74321 Bietigheim-Bissingen (DE)**
- **FLAMM, Daniel**
  **70806 Kornwestheim (DE)**

(74) Vertreter: **Trumpf Patentabteilung**
**Trumpf GmbH & Co KG**
**TH550 Patente und Lizenzen**
**Johann-Maus-Straße 2**
**71254 Ditzingen (DE)**

(56) Entgegenhaltungen:
**DE-A1- 102011 102 355**

- **SOLAK H H ET AL: "Patterning of circular structure arrays with interference lithography", JOURNAL OF VACUUM SCIENCE & TECHNOLOGY B: MICROELECTRONICSPROCESSING AND PHENOMENA, AMERICAN VACUUM SOCIETY, NEW YORK, NY, US, vol. 21, no. 6, 1 November 2003 (2003-11-01), pages 2883 - 2887, XP002374099, ISSN: 0734-211X, DOI: 10.1116/ 1.1622943**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Ortsfrequenzfilteranordnung für einen Laserstrahl und ein Verfahren zur Ortsfrequenzfilterung eines Laserstrahls.

Aus der deutschen Offenlegungsschrift DE 10 2004 058 044 A1 geht eine Ortsfrequenzfiltereinrichtung zur Ortsfrequenzfilterung von Laserstrahlen hervor, die einen für die Laserstrahlung zumindest teilweise transparenten Transmissionskörper und ein an den Transmissionskörper angrenzend angeordnetes oder in den Transmissionskörper integriertes, eine Apertur aufweisendes Element aufweist, wobei das Element eine diffraktive und/oder refraktive Ablenkstruktur aufweist. Mittels einer solchen diffraktiven Blende werden ungewünschte Lichtanteile eines Laserstrahls gezielt in wohldefinierte Raumwinkel gebeugt, wo sie effizient absorbiert werden können. Eine solche diffraktive Blende oder Aperturblende kann beispielsweise am Ausgang einer Transportfaser für Laserstrahlung für eine Begrenzung des aus der Transportfaser austretenden Bündels sorgen und nachfolgende Komponenten schützen. Der diffraktive Bereich einer solchen Blende vermeidet eine Wechselwirkung von Randfeldern mit der jeweiligen Blendengeometrie, insbesondere mit ansonsten herstellungsbedingt nicht optimalen Blendenrandbereichen, die den Nutzstrahl in seinem Propagationsverhalten beeinflussen könnten. Bei Aperturblenden ohne diffraktiven Bereich können virtuelle Quellen mit ungewünschten Ausbreitungsrichtungen entstehen, die nachfolgende Optiken oder ein zu bearbeitendes Werkstück belasten.

Während dies mit einer diffraktiven Blende, wie sie aus der DE 10 2004 058 044 A1 bekannt ist, vermieden wird, ist es hiermit nur schwer oder nicht möglich, unerwünschte Strahlanteile zu filtern, die einem Hauptstrahl oder Nutzstrahl überlagert sind. Dies erweist sich als umso schwieriger, je mehr diese unerwünschten Strahlanteile mit dem eigentlichen Nutz- oder Hauptstrahl überlappen.

Aus der DE 10 2011 102 355 A1 ist ein System zur Bestimmung der Topographie der Kornea eines Auges bekannt, bestehend aus einem Element zur Erzeugung bestehend aus einem Element zur Erzeugung von Ringen ähnlich zu Placidoscheiben und einer Beleuchtungseinheit, die in einem Beleuchtungsstrahlengang angeordnet sind, sowie einer, in einem Detektionsstrahlengang angeordneten Bildaufnahmeeinheit und einer Steuer- und Auswerteeinheit, wobei das Element zur Erzeugung von Ringen ähnlich zu Placidoscheiben ein gefresneltes Axicon mit ringförmigen Strukturen unterschiedlicher Radien ist, zwischen der Beleuchtungseinheit und dem gefresneltes Axicon ein optisches Element zur vollflächigen Beleuchtung des gefresneltes Axicons mit ringförmig, ebenen Wellen und ein optisches Element zur Trennung von Beleuchtungs- und Detektionsstrahlengang angeordnet sind und wobei die, aus einem Abbildungssystem und einem Bildsensor bestehende Bildaufnahmeeinheit für eine telezentrische, entfernungsunabhängige Bilderfassung ausgebildet ist.

Aus der wissenschaftlichen Veröffentlichung SOLAK H H ET AL: "Patterning of circular structure arrays with interference lithography", JOURNAL OF VACUUM SCIENCE & TECHNOLOGY B: MICROELECTRONICSPROCESSING AND PHENOMENA, AMERICAN VACUUM SOCIETY, NEW YORK, NY, US, Bd. 21, Nr. 6, 1. November 2003 (2003-11-01), Seiten 2883-2887, XP002374099, ISSN: 0734-211X, D01: 10.1116/1.1622943, sind Beugungsgitter zur Erzeugung kreisförmiger Interferenzmuster bekannt.

Der Erfindung liegt die Aufgabe zugrunde, eine Ortsfrequenzfilteranordnung sowie ein Verfahren zur Ortsfrequenzfilterung eines Laserstrahls zu schaffen, wobei die genannten Nachteile nicht auftreten.

Die Aufgabe wird gelöst durch eine Ortsfrequenzfilteranordnung gemäß Anspruch 1.

Die Ortsfrequenzfiltereinrichtung der Ortsfrequenzfilteranordnung weist einen Neutralbereich auf, der eingerichtet ist, um den Laserstrahl zu transmittieren oder zu reflektieren. Die Ortsfrequenzfiltereinrichtung weist einen radial an den Neutralbereich anschließenden Ablenkbereich auf, der eingerichtet ist, um Strahlanteile des Laserstrahls von einer Strahlachse des Laserstrahls abzulenken. Der Ablenkbereich weist einen Konstantabschnitt auf, in dem eine Ablenkwirkung auf die Strahlanteile des Laserstrahls für jeden Ort in dem Konstantabschnitt unabhängig von einem Abstand des Orts von dem Neutralbereich ist. Der Ablenkbereich weist außerdem einen Variationsabschnitt auf, in dem die Ablenkwirkung auf die Strahlanteile des Laserstrahls abhängig von einem Abstand zu dem Neutralbereich variiert. Mit dem Konstantabschnitt des Ablenkbereichs ist es möglich, von dem Haupt- oder Nutzstrahl hinreichend separierte, unerwünschte Strahlanteile sicher und wirksam abzulenken und damit zu filtern. Der Variationsabschnitt des Ablenkbereichs erlaubt demgegenüber eine insbesondere graduelle Filterung unerwünschter Strahlanteile, die sehr nahe an dem Haupt- oder Nutzstrahl angeordnet sind oder mit diesem überlappen, ohne dabei den Haupt- oder Nutzstrahl nachteilig zu beeinflussen oder übermäßig zu beschneiden. Somit stellt die hier vorgeschlagene Ortsfrequenzfiltereinrichtung eine verbesserte Möglichkeit bereit, einen Laserstrahl zu filtern und insbesondere auch unerwünschte Strahlanteile zu entfernen, die dem Haupt- oder Nutzstrahl überlagert sind.

Der Neutralbereich ist insbesondere ein Bereich der Ortsfrequenzfiltereinrichtung, in welchem der Laserstrahl ungestört, das heißt insbesondere ohne Ablenkung von Strahlanteilen des Laserstrahls von der Strahlachse, transmittiert oder reflektiert wird. Der Neutralbereich ist also insbesondere eingerichtet, um den Laserstrahl ungestört zu transmittieren oder zu reflektieren.

Unter einer radialen Richtung wird hier eine Richtung verstanden, die senkrecht auf der Strahlachse steht. Die Strahlachse ist insbesondere eine Propagationsachse des Laserstrahls. Sie bezeichnet dementsprechend insbesondere eine Ausbreitungsrichtung des Laserstrahls oder erstreckt sich in Ausbreitungsrichtung des Laserstrahls. Insbesondere ist die Strahlachse eine Achse, die mit dem Poyntingvektor des Laserstrahls zusammenfällt.

Dass die Wirkung in dem Variationsabschnitt variiert, bedeutet insbesondere, dass eine Ablenkeffizienz, insbesondere eine Stärke einer Phasenmodulation, ortsabhängig in dem Variationsabschnitt variiert. Eine Ablenkrichtung oder ein Ablenkwinkel ist/sind demgegenüber bevorzugt auch in dem Variationsabschnitt konstant.

Dass die Ablenkwirkung auf die Strahlanteile des Laserstrahls für jeden Ort in dem Konstantabschnitt unabhängig von einem Abstand des Orts von dem Neutralbereich ist, bedeutet, dass in dem Konstantabschnitt eine konstante Ablenkwirkung gegeben ist, die nicht ortsabhängig ist. Demnach sind in dem Konstantabschnitt insbesondere sowohl der Ablenkwinkel oder die Ablenkrichtung als auch die Stärke oder Intensität der Ablenkung ortsunabhängig und damit konstant.

Dass in dem Variationsabschnitt die Ablenkwirkung abhängig von einem Abstand zu dem Neutralbereich variiert, bedeutet insbesondere, dass Orte des Variationsabschnitts, die einen gleichen Abstand zu dem Neutralbereich aufweisen, eine gleiche Ablenkwirkung, insbesondere eine gleiche Stärke der Ablenkung, aufweisen. Orte, die verschiedene Abstände zu dem Neutralbereich aufweisen, weisen dagegen bevorzugt eine verschiedene Ablenkwirkung, insbesondere eine verschiedene Stärke der Ablenkung auf.

Der Abstand eines Orts in dem Variationsabschnitt zu dem Neutralbereich wird bevorzugt senkrecht zu einer gedachten oder realen Grenzlinie zwischen dem Variationsabschnitt und dem Neutralbereich gemessen. Dabei wird der Abstand insbesondere abhängig von einer Form oder Geometrie der gedachten oder realen Grenzlinie oder des Neutralbereichs gemessen. Ist beispielsweise der Neutralbereich kreisförmig, wird der Abstand bevorzugt radial zu dem kreisförmigen Neutralbereich gemessen. Ist dagegen der Neutralbereich beispielsweise rechteckförmig ausgebildet, wird der Abstand bevorzugt jeweils senkrecht zu einer Begrenzungskante des Neutralbereichs gemessen.

Der Neutralbereich kann insbesondere kreisrund, elliptisch oder oval, oder rechteckig, oder in einer beliebigen anderen Geometrie ausgebildet sein. Vorzugsweise ist er an die Querschnittsgeometrie eines zu filternden Laserstrahls angepasst. Die Form des Ablenkbereichs entspricht bevorzugt der Form des Neutralbereichs. Dies gilt insbesondere sowohl für den Konstantabschnitt als auch für den Variationsabschnitt.

Gemäß einer bevorzugten Ausgestaltung ist der Variationsabschnitt zwischen dem Neutralbereich einerseits und dem Konstantabschnitt andererseits angeordnet. In vorteilhafter Weise erfolgt somit ein Übergang in der Ablenkwirkung von dem Neutralbereich zu dem Konstantabschnitt, insbesondere ein Übergang von 0 % Ablenkwirkung in dem Neutralbereich zu 100 % Ablenkwirkung in dem Konstantabschnitt, vorzugsweise ein kontinuierlicher oder stetiger, insbesondere ein linearer oder gaußförmiger - insbesondere in Form einer halben Gauß-Funktion - Übergang. Insbesondere auf diese Weise können unerwünschte Strahlanteile, die dem Haupt- oder Nutzstrahl überlagert sind, gefiltert werden, ohne dabei den Haupt- oder Nutzstrahl zu sehr zu beeinträchtigen oder zu beschneiden.

Gemäß einer bevorzugten Ausgestaltung schließt sich an den Ablenkbereich ein Ausblendbereich an, in welchem der Laserstrahl absorbiert wird. Auf diese Weise können Strahlanteile außerhalb des zu filternden Strahls ausgeblendet werden.

Gemäß einer Weiterbildung der Erfindung ist vorgesehen, dass der Neutralbereich zentral angeordnet und von dem Ablenkbereich außen, insbesondere radial außen, umgriffen ist. Dabei ist der Variationsabschnitt - radial - zwischen dem Neutralbereich und dem Konstantabschnitt angeordnet. Der Neutralbereich ist dementsprechend insbesondere ein zentraler Neutralbereich, an den sich radial außen der Ablenkbereich anschließt, der bevorzugt den Konstantabschnitt als äußeren Konstantabschnitt und den Variationsabschnitt als inneren Variationsabschnitt aufweist. In radialer Richtung gesehen folgen demnach von radial innen nach radial außen zunächst der Neutralbereich, dann der Variationsabschnitt und schließlich der Konstantabschnitt. Dies stellt eine besonders einfache Ausgestaltung der Ortsfrequenzfiltereinrichtung dar.

Alternativ ist es möglich, dass der Neutralbereich radial außen angeordnet ist, an den sich der Ablenkbereich radial innen anschließt, wobei auch hier der Variationsabschnitt zwischen dem Neutralbereich und dem Konstantabschnitt angeordnet ist. In diesem Fall ist insbesondere der Konstantabschnitt ein zentraler Konstantabschnitt, an den sich radial außen der Variationsabschnitt anschließt, an den sich wiederum radial noch weiter außen der Neutralbereich anschließt. Auch eine solche, zu der zuvor beschriebenen Ausgestaltung quasi inverse Ausgestaltung stellt eine sehr geeignete Möglichkeit dar, einen Laserstrahl zu filtern.

Gemäß einer Weiterbildung der Erfindung ist vorgesehen, dass die Ablenkwirkung auf die Strahlanteile des Laserstrahls in dem Variationsabschnitt mit zunehmendem Abstand von dem Neutralbereich zunimmt. Dies ist - wie bereits angedeutet - besonders vorteilhaft, da so in besonders geeigneter Weise unerwünschte Strahlanteile, die dem Haupt- oder Nutzstrahl überlagert sind, gefiltert werden können, ohne den Haupt- oder Nutzstrahl selbst übermäßig zu beeinträchtigen, wobei insbesondere unerwünschte Effekte wie Beugung an Kanten vermieden oder zumindest reduziert werden. Wie ebenfalls bereits ausgeführt, nimmt die Ablenkwirkung ausgehend von dem Neutralbereich zu dem Konstantabschnitt in dem Variationsabschnitt bevorzugt von 0 %, an der Grenze oder im Übergangsbereich zu dem Neutralbereich, bis auf 100 %, an der Grenze oder im Übergangsbereich zu dem Konstantabschnitt, zu. Dabei entspricht der Wert von 0 % derjenigen Ablenkwirkung, die im Neutralbereich gegeben ist, vorzugsweise also keinerlei Ablenkwirkung, wobei der Wert von 100 % derjenigen Ablenkwirkung entspricht, die in dem Konstantabschnitt gegeben ist. Besonders bevorzugt nimmt die Ablenkwirkung in dem Variationsabschnitt kontinuierlich oder stetig, ganz besonders bevorzugt linear mit zunehmendem Abstand von dem Neutralbereich zu.

Gemäß einer Weiterbildung der Erfindung ist vorgesehen, dass der Ablenkbereich eine Phasenbeeinflussungsstruktur aufweist. Bevorzugt wird eine Amplitude der Laserstrahlung in dem Ablenkbereich nicht beeinflusst. Der Ablenkbereich wirkt somit in bevorzugter Ausgestaltung ausschließlich auf die Phase der Laserstrahlung. Die Phasenbeeinflussungsstruktur ist vorzugsweise in dem Konstantabschnitt konstant, wobei sie in dem Variationsabschnitt bezüglich zumindest einer Eigenschaft ortsabhängig, insbesondere abhängig von dem Abstand zu dem Neutralbereich, variiert. Geeignete Phasenbeeinflussungsstrukturen gehen beispielsweise aus Farn, M. W. Binary gratings with increased efficiency. Appl. Opt. 31(22), 4453-4458 (1992); Ngcobo, S. et al. A digital laser for on-demand laser modes. Nat. Commun. 4:2289 doi: 10.1038/ncomms3289 (2013); Eckstein W. et al. Comparison of different simulation methods for effective medium computer generated holograms. Opt. Express 21(10), 12424-12433 (2013) hervor.

Gemäß einer Weiterbildung der Erfindung ist vorgesehen, dass die Phasenbeeinflussungsstruktur als diffraktive Ablenkstruktur ausgebildet ist. Die diffraktive Ablenkstruktur ist periodisch mit einer bestimmten, bevorzugt konstanten Modulationsperiode und weist in dem Konstantbereich eine konstante Modulationsamplitude auf, wobei die Modulationsperiode und die Modulationsamplitude die Phasenbeeinflussung der Laserstrahlung durch die diffraktive Ablenkstruktur bestimmen. Insbesondere bestimmt die Modulationsamplitude eine Stärke der Phasenbeeinflussung, die auch als Phasenmodulation bezeichnet wird. In dem Variationsabschnitt variiert die Modulationsamplitude der diffraktiven Ablenkstruktur.

Die diffraktive Ablenkstruktur ist gemäß einer bevorzugten Ausgestaltung als geometrisches Gitter ausgebildet. Unter der Modulationsamplitude der diffraktiven Ablenkstruktur wird in diesem Fall eine geometrische Höhe oder Tiefe der diffraktiven Ablenkstruktur - vorzugsweise entlang der Strahlachse gemessen - verstanden. Die Modulationsamplitude ist dann eine Gitterhöhe des geometrischen Gitters.

Gemäß einem einer anderen bevorzugten Ausgestaltung ist die diffraktive Ablenkstruktur durch eine örtliche, insbesondere räumliche Variation eines Brechungsindex gebildet. Besonders bevorzugt ist die diffraktive Ablenkstruktur als Volumengitter ausgebildet.

Die Modulationsperiode ist insbesondere die senkrecht zur Strahlachse, das heißt in radialer Richtung, gemessene Periodenlänge der diffraktiven Ablenkstruktur. Die Modulationsperiode ist vorzugsweise sowohl in dem Konstantabschnitt als auch in dem Variationsabschnitt konstant, insbesondere in dem Konstantabschnitt und in dem Variationsabschnitt gleich.

Gemäß einer Weiterbildung der Erfindung ist vorgesehen, dass die Ablenkwirkung auf die Strahlanteile des Laserstrahls in dem Variationsabschnitt gemäß einer bestimmten Funktion des Abstands von dem Neutralbereich variiert. Auf diese Weise kann die Ablenkwirkung und damit insgesamt das Verhalten der Ortsfrequenzfiltereinrichtung vorteilhaft auf wohldefinierte Weise beeinflusst werden. Wie bereits ausgeführt, stellt eine bevorzugte Ausgestaltung einer solchen Variation der Ablenkwirkung eine lineare Funktion dar. Es ist aber gemäß einer anderen Ausgestaltung auch möglich, dass die bestimmte Funktion eine Gauß-Funktion ist. Auch andere bestimmte Funktionen sind möglich.

Gemäß einer Weiterbildung der Erfindung ist vorgesehen, dass die Ortsfrequenzfiltereinrichtung einen Filterkörper aufweist, an dem der Neutralbereich ausgebildet ist. Der Ablenkbereich ist auf den Filterkörper aufgebracht oder in den Filterkörper eingebracht. Dies stellt eine besonders einfach bereitzustellende und zugleich sehr effektive Ausgestaltung der Ortsfrequenzfiltereinrichtung dar. Der Filterkörper ist insbesondere ein Substrat, vorzugsweise aus einem Material, welches für die Laserstrahlung transmittierend oder reflektierend ausgebildet ist. Insbesondere ist die diffraktive Ablenkstruktur bevorzugt auf den Filterkörper aufgebracht oder in den Filterkörper eingebracht. Insbesondere ist der Ablenkbereich/die diffraktive Ablenkstruktur bevorzugt durch lokale Veränderung, insbesondere Strukturierung, des Filterkörpers, insbesondere des Materials des Filterkörpers, hergestellt.

Gemäß einer Weiterbildung der Erfindung ist vorgesehen, dass der Neutralbereich ein Neutralbreitenmaß aufweist. Das Neutralbreitenmaß ist insbesondere ein Halbbreitenmaß, also ein Maß, welches eine halbe Breite angibt, oder eine Ringbreite, insbesondere einen Radius.

Das Neutralbreitenmaß beträgt bevorzugt von mindestens 5 % bis höchstens 130 % eines Strahlbreitenmaßes eines zu filternden Laserstrahls.

Das Strahlbreitenmaß des zu filternden Laserstrahls ist dabei bevorzugt ebenfalls ein Halbbreitenmaß, insbesondere ein Radius. Das Strahlbreitenmaß wird dabei im Fall eines Gaußförmigen Laserstrahls bevorzugt von der Strahlachse aus bis zu einem Ort gemessen, an dem die Laserstrahlung auf einen Bruchteil von $1/e^2$ der Maximalintensität auf der Strahlachse abgefallen ist.

Gemäß einer bevorzugten Ausgestaltung beträgt das Neutralbreitenmaß bevorzugt von mindestens 20 % bis höchstens 60 % des Strahlbreitenmaßes. Dieser Wertebereich hat sich als besonders günstig erwiesen für die Filterung von unerwünschten Strahlanteilen, die mit dem Haupt- oder Nutzstrahl überlappen.

Gemäß einer anderen bevorzugten Ausgestaltung beträgt das Neutralbreitenmaß bevorzugt von mindestens 60 % bis höchstens 100 % des Strahlbreitenmaßes. Dieser Wertebereich hat sich als besonders günstig erwiesen zur Filterung von unerwünschten Strahlanteilen, die nicht oder nur in geringem Maß mit dem Haupt- oder Nutzstrahl überlappen.

Alternativ oder zusätzlich weist der Variationsabschnitt bevorzugt ein Variationsbreitenmaß auf. Das Variationsbreitenmaß ist ebenfalls insbesondere ein Halbbreitenmaß oder eine Ringbreite, insbesondere ein Radius. Das Variationsbreitenmaß beträgt bevorzugt von mindestens 10 % bis höchstens 150 % des Neutralbreitenmaßes.

Gemäß einer bevorzugten Ausgestaltung beträgt das Variationsbreitenmaß von mindestens 10 % bis höchstens 40 %, vorzugsweise 30 %, des Neutralbreitenmaßes. Dies hat sich als besonders günstig erwiesen zur Filterung unerwünschter Strahlanteile, die nur wenig oder nicht mit dem Haupt- oder Nutzstrahl überlappen.

Gemäß einer anderen bevorzugten Ausgestaltung beträgt das Variationsbreitenmaß von mindestens 40 % bis höchstens 150 %, vorzugsweise 100 %, des Neutralbreitenmaßes. Diese Ausgestaltung hat sich als besonders günstig erwiesen zur Filterung unerwünschter Strahlanteile, die mit dem Haupt- oder Nutzstrahl überlappen.

Sofern ein Bereich ringförmig ausgebildet ist, ist das entsprechende Breitenmaß bevorzugt eine Ringbreite, das heißt eine volle Breite des Rings, gemessen in einer definierten Richtung senkrecht zu Begrenzungslinien des Rings, mithin quasi ein auf die Ringfläche entfallender Radienabschnitt des äußeren Ringradius.

Gemäß einer Weiterbildung der Erfindung ist vorgesehen, dass die Ortsfrequenzfiltereinrichtung als Transmissionsblende, als Linse, als Schutzglas, als Faserendkappe, oder als Spiegel ausgebildet ist. Dies stellt besonders geeignete Ausgestaltungen der Ortsfrequenzfiltereinrichtung dar.

Gemäß einer Weiterbildung der Erfindung ist vorgesehen, dass die diffraktive Ablenkstruktur so ausgebildet ist, dass sie keine nullte Beugungsordnung, das heißt keine Beugung nullter Ordnung, erzeugt. Somit werden unerwünschte Strahlabschnitte möglichst vollständig von der Strahlachse abgelenkt.

Bevorzugt ist die diffraktive Ablenkstruktur so ausgebildet, dass sie ausschließlich eine erste Beugungsordnung, das heißt ausschließlich Beugung erster Ordnung, erzeugt. Somit werden unerwünschte Strahlanteile in einen wohldefinierten Raumwinkel abgelenkt, wo sie in einfacher und genauer Weise ausgefiltert werden können.

Gemäß einer bevorzugten Ausgestaltung weist die diffraktive Ablenkstruktur ein Blazegitter auf oder ist als Blazegitter ausgebildet. Dies stellt eine ebenso einfache wie funktionale Ausgestaltung der diffraktiven Ablenkstruktur dar.

Gemäß einer Weiterbildung der Erfindung ist vorgesehen, dass die diffraktive Ablenkstruktur in den Filterkörper geätzt ist. Auf diese Weise kann die diffraktive Ablenkstruktur sehr einfach und mit hoher Genauigkeit erzeugt werden.

Alternativ ist die diffraktive Ablenkstruktur bevorzugt als Volumenmodifikation in den Filterkörper eingebracht, insbesondere als Volumengitter. Auf diese Weise können mit hoher Genauigkeit im Volumen des Filterkörpers, insbesondere des Substrats, Modifikationen erzeugt werden, wobei letztlich Bereiche verschiedener Brechzahl resultieren, die diffraktiv wirken.

Die Ortsfrequenzfilteranordnung weist eine Konstantfiltereinrichtung auf. Mithilfe der Konstantfiltereinrichtung können die durch die Ortsfrequenzfiltereinrichtung abgelenkten, unerwünschten Strahlanteile ausgefiltert, besonders bevorzugt ausgeblendet, insbesondere absorbiert werden. In Zusammenhang mit der Ortsfrequenzfilteranordnung ergeben sich insbesondere die Vorteile, die in Zusammenhang mit der Ortsfrequenzfiltereinrichtung erläutert wurden.

Unter einer Konstantfiltereinrichtung wird dabei eine Einrichtung verstanden, die lediglich einerseits einen Neutralbereich und andererseits einen an den Neutralbereich anschließenden Ausblendbereich aufweist. Dabei ist es möglich, dass der Neutralbereich als zentraler Neutralbereich ausgebildet ist, der von dem Ausblendbereich radial außen umgriffen wird. Es ist aber auch eine inverse Anordnung möglich, bei welcher der Neutralbereich den zentralen Ausblendbereich radial außen umgreift. Der Neutralbereich transmittiert oder reflektiert dabei die Laserstrahlung möglichst ungestört, vorzugsweise vollständig ungestört, während der Ausblendbereich bevorzugt die Laserstrahlung weder transmittiert noch reflektiert, vorzugsweise absorbiert. Die Konstantfiltereinrichtung weist somit insbesondere keinen Ablenkbereich auf, insbesondere weder einen Konstantabschnitt noch einen Variationsabschnitt.

Die Konstantfiltereinrichtung ist bevorzugt als Blende, insbesondere als Aperturblende, ausgebildet.

Gemäß einer bevorzugten Ausgestaltung ist die Konstantfiltereinrichtung in Strahlausbreitungsrichtung des Laserstrahls gesehen hinter der Ortsfrequenzfiltereinrichtung angeordnet.

Insbesondere ist die Konstantfiltereinrichtung bevorzugt um eine bestimmte Propagationsstrecke von der Ortsfrequenzfiltereinrichtung beabstandet angeordnet. Durch den Ablenkbereich der Ortsfrequenzfiltereinrichtung abgelenkte Strahlanteile werden dann vorteilhaft durch die Konstantfiltereinrichtung ausgeblendet, da sie im Vergleich zu dem erwünschten Haupt- oder Nutzstrahl mit erhöhtem Divergenzwinkel propagieren, sodass sie nach der bestimmten Propagationsstrecke hinreichend räumlich von dem Haupt- oder Nutzstrahl separiert sind und somit durch die Konstantfiltereinrichtung beseitigt, insbesondere absorbiert werden können.

Die Ortsfrequenzfilteranordnung ist auf diese Weise insbesondere eingerichtet zur Amplitudenfilterung des Laserstrahls.

Die Ortsfrequenzfilteranordnung weist eine erste Sammellinse auf, die in Strahlausbreitungsrichtung des Laserstrahls hinter der Ortsfrequenzfiltereinrichtung angeordnet ist. Mithilfe der ersten Sammellinse kann die durch die Ortsfrequenzfiltereinrichtung gefilterte Laserstrahlung in vorteilhafter Weise beeinflusst werden. Bevorzugt ist die erste Sammellinse in Strahlausbreitungsrichtung des Laserstrahls gesehen vor der Konstantfiltereinrichtung angeordnet. Auf diese Weise kann die Laserstrahlung mittels der ersten Sammellinse insbesondere auf die Konstantfiltereinrichtung abgebildet werden, um eine besonders effektive Filterung zu bewirken.

Alternativ ist es möglich, dass die Konstantfiltereinrichtung in die erste Sammellinse integriert ist, oder dass die erste Sammellinse als Konstantfiltereinrichtung ausgebildet ist. Insbesondere kann die erste Sammellinse in einem radial äußeren Bereich opak ausgebildet oder in ihrer Linsenwirkung beschränkt sein; oder die Linsenwirkung ist im radial äußeren Bereich aufgehoben; oder die erste Sammellinse ist in einem Gehäuse angeordnet, wobei das Gehäuse den Ausblendbereich bildet. Die erste Sammellinse kann auch von einem gekühlten Absorber umgriffen oder an einem gekühlten Absorber angeordnet sein, der den Ausblendbereich bereitstellt.

Gemäß einer Weiterbildung der Erfindung ist vorgesehen, dass die Ortsfrequenzfilteranordnung - alternativ oder zusätzlich zu der ersten Sammellinse - eine zweite Sammellinse aufweist, die in Strahlausbreitungsrichtung des Laserstrahls vor der Ortsfrequenzfiltereinrichtung angeordnet ist. Diese zweite Sammellinse kann in vorteilhafter Weise den Laserstrahl vor der Ortsfrequenzfiltereinrichtung aufweiten. Dies erweist sich insbesondere als günstig, wenn der Laserstrahl einen sehr kleinen Strahldurchmesser aufweist, sodass an sich - ohne die zweite Sammellinse - sehr kleine Strukturgrößen für die Ortsfrequenzfiltereinrichtung nötig wären. Wird der Laserstrahl in diesem Fall aufgeweitet, kann die Ortsfrequenzfiltereinrichtung entsprechend größere Strukturen aufweisen, sodass sie einfacher und kostengünstiger gefertigt werden kann. Es ist somit insbesondere günstig, die zweite Sammellinse vorzusehen, wenn die Laserstrahlung vor der Ortsfrequenzfiltereinrichtung aus einem Faserbündel austritt oder ausgekoppelt wird und daher einen besonders kleinen Strahldurchmesser aufweist. Allgemein kann das Strahlbreitenmaß mittels der zweiten Sammellinse an einen Außendurchmesser der Ortsfrequenzfiltereinrichtung angepasst, insbesondere verkleinert oder vergrößert werden. Dies erweist sich auch als günstig, wenn der Strahldurchmesser größer ist als der Außendurchmesser der Ortsfrequenzfiltereinrichtung.

Alternativ oder zusätzlich weist die Ortsfrequenzfilteranordnung bevorzugt eine dritte Sammellinse auf, die in Strahlausbreitungsrichtung des Laserstrahls hinter der Konstantfiltereinrichtung angeordnet ist. Diese kann - separat, oder auch in Kombination mit der ersten Sammellinse und/oder der zweiten Sammellinse - dazu dienen, den Laserstrahl am Ausgang der Ortsfrequenzfilteranordnung für nachfolgende Elemente oder ein zu bearbeitendes Werkstück zu beeinflussen, insbesondere zu formen. Insbesondere kann der Laserstrahl durch die dritte Sammellinse kollimiert werden.

Gemäß einer besonders bevorzugten Ausgestaltung weist die Ortsfrequenzfilteranordnung eine sogenannte 4f-Anordnung auf, wobei 4f für vier Fokuslängen steht. Bei einem solchen Aufbau sind - in Strahlausbreitungsrichtung - insbesondere die folgenden Elemente in der angegebenen Reihenfolge hintereinander angeordnet: Die Ortsfrequenzfiltereinrichtung, die erste Sammellinse, die Konstantfiltereinrichtung, und die dritte Sammellinse. Dabei sind bevorzugt die Konstantfiltereinrichtung einerseits und die Ortsfrequenzfiltereinrichtung andererseits jeweils im Fokus der ersten Sammellinse angeordnet, wobei bevorzugt zusätzlich die Konstantfiltereinrichtung im Fokus der dritten Sammellinse angeordnet ist. Mit einer solchen Anordnung kann die Laserstrahlung besonders gut gefiltert und vorzugsweise zugleich kollimiert werden.

Es ist möglich, dass bei einer solchen 4f-Anordnung in Strahlausbreitungsrichtung vor der Ortsfrequenzfiltereinrichtung die zweite Sammellinse angeordnet ist. Es ist aber auch möglich, dass die Ortsfrequenzfilteranordnung in dieser bevorzugten Ausgestaltung keine zweite Sammellinse aufweist.

Die Aufgabe wird schließlich auch gelöst, durch ein Verfahren zur Ortsfrequenzfilterung eines Laserstrahls gemäß Anspruch 11. Der Neutralbereich der Ortsfrequenzfiltereinrichtung wird von dem Laserstrahl durchstrahlt, oder der Laserstrahl wird durch den Neutralbereich der Ortsfrequenzfiltereinrichtung reflektiert. Strahlanteile des Laserstrahls werden in dem radial an den Neutralbereich anschließenden Ablenkbereich von einer Strahlachse des Laserstrahls abgelenkt. Die Strahlanteile werden in dem Konstantabschnitt des Ablenkbereichs mit konstanter Ablenkwirkung unabhängig von einem Abstand von dem Neutralbereich abgelenkt. Die Strahlanteile werden in dem zwischen dem Neutralbereich und dem Konstantabschnitt angeordneten Variationsabschnitt des Ablenkbereichs in Abhängigkeit von einem Abstand zu dem Neutralbereich mit variierender Ablenkwirkung abgelenkt. Besonders bevorzugt werden die Strahlanteile in dem Variationsabschnitt in Abhängigkeit von dem Abstand zu dem Neutralbereich mit mit zunehmendem Abstand von dem Neutralbereich steigender Ablenkwirkung abgelenkt.

In Zusammenhang mit dem Verfahren ergeben sich insbesondere die Vorteile, die bereits in Zusammenhang mit der Ortsfrequenzfiltereinrichtung und der Ortsfrequenzfilteranordnung erläutert wurden.

In bevorzugter Ausgestaltung wird im Rahmen des Verfahrens eine erfindungsgemäße Ortsfrequenzfiltereinrichtung oder eine Ortsfrequenzfiltereinrichtung nach einem der zuvor beschriebenen Ausführungsbeispiele verwendet. Alternativ oder zusätzlich wird im Rahmen des Verfahrens bevorzugt eine erfindungsgemäße Ortsfrequenzfilteranordnung oder eine Ortsfrequenzfilteranordnung nach einem der zuvor beschriebenen Ausführungsbeispiele verwendet. Dabei ergeben sich in besonderer Weise die bereits beschriebenen Vorteile.

Gemäß einer Weiterbildung der Erfindung ist vorgesehen, dass der Ablenkbereich eine diffraktive Ablenkstruktur aufweist. Dabei wird bevorzugt durch die diffraktive Ablenkstruktur eine nullte Beugungsordnung unterdrückt.

Besonders bevorzugt wird durch diffraktive Ablenkstruktur ausschließlich eine erste Beugungsordnung erzeugt.

Gemäß einer Weiterbildung der Erfindung ist vorgesehen, dass die in dem Ablenkbereich abgelenkten Strahlanteile von der Strahlachse des Laserstrahls weg um einen Ablenkwinkel abgelenkt werden, der sich als Arkussinus des Quotienten aus einer Wellenlänge der Laserstrahlung dividiert durch eine Modulationsperiode des Ablenkbereichs, insbesondere eine Modulationsperiode der diffraktiven Ablenkstruktur, ergibt, insbesondere nach der folgenden Formel:

$$\theta = \sin^{-1}\left(\frac{\lambda}{g}\right) . \qquad (1)$$

Dabei ist $\theta$ der Ablenkwinkel, $\lambda$ ist die Wellenlänge der Laserstrahlung, und g ist die Modulationsperiode des Ablenkbereichs. Bevorzugt ergibt sich der Ablenkwinkel näherungsweise als Quotient der Wellenlänge der Laserstrahlung und der Modulationsperiode, insbesondere nach folgender Formel:

$$\theta \approx \frac{\lambda}{g} . \qquad (2)$$

Beträgt beispielsweise die Modulationsperiode 10 $\mu$m, beträgt der Ablenkwinkel für Infrarotstrahlung ungefähr 5,7°. Für grünes Licht beträgt er ungefähr die Hälfte.

Bevorzugt werden durch den Ablenkbereich der Ortsfrequenzfiltereinrichtung abgelenkte Strahlanteile von einer bevorzugt um eine bestimmte Propagationsstrecke von der Ortsfrequenzfiltereinrichtung beabstandet angeordnete Konstantfiltereinrichtung beseitigt, insbesondere absorbiert.

Auf diese Weise wird insbesondere eine Amplitudenfilterung des Laserstrahls durchgeführt.

Die Erfindung wird im Folgenden anhand der Zeichnung näher erläutert. Dabei zeigen:

Figur 1     eine schematische Darstellung einer Ortsfrequenzfiltereinrichtung gemäß dem Stand der Technik;

Figur 2     eine schematische Darstellung eines erfindungsgemäßen Ausführungsbeispiels einer Ortsfrequenzfiltereinrichtung;

Figur 3     eine schematische Darstellung eines ersten Ausführungsbeispiels einer Ortsfrequenzfilteranordnung, und

Figur 4     eine schematische Darstellung eines zweiten Ausführungsbeispiels einer Ortsfrequenzfilteranordnung.

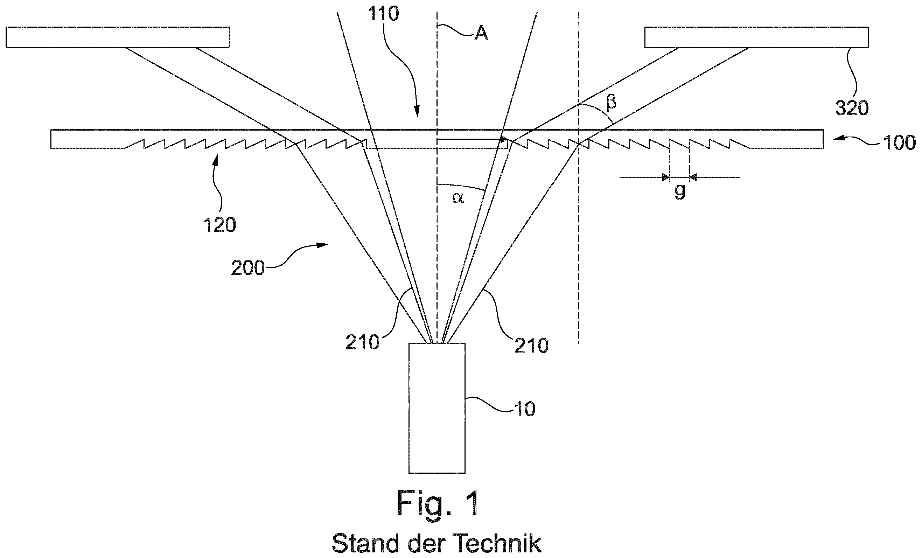

**Fig. 1** zeigt eine schematische Darstellung einer Ortsfrequenzfiltereinrichtung 100 gemäß dem Stand der Technik. Die Ortsfrequenzfiltereinrichtung 100 ist eingerichtet zur Verwendung mit einem Laserstrahl 200, der hier beispielhaft aus einer Faser oder einem Faserbündel 10 ausgekoppelt ist. Der Laserstrahl 200 ist hier ein divergenter Laserstrahl. Es ist aber genauso auch möglich, eine solche Ortsfrequenzfiltereinrichtung 100 mit einem kollimierten Laserstrahl 200 zu verwenden.

Die Ortsfrequenzfiltereinrichtung 100 weist einen Neutralbereich 110 auf, der eingerichtet ist, um den Laserstrahl 200 hier zu transmittieren. Der Neutralbereich 110 kann aber auch eingerichtet sein, um den Laserstrahl 200 zu reflektieren.

An den Neutralbereich 110 schließt sich ein Ablenkbereich 120 an, der eingerichtet ist, um Strahlanteile 210 des Laserstrahls 200 von einer Strahlachse A des Laserstrahls 200 abzulenken. Dabei ergibt sich ein Gesamt-Ablenkwinkel $\beta$ hier einerseits aus einem durch den Ablenkbereich 120 bestimmten Ablenkwinkel $\theta$ und andererseits einem Öffnungswinkel $\alpha$ des divergenten Laserstrahls 200. Ist der Laserstrahl 200 als kollimierter Laserstrahl ausgebildet, wird er durch den Ablenkbereich 120 lediglich um den Ablenkwinkel $\theta$ abgelenkt. Durch den Ablenkbereich 120 abgelenkte Strahlanteile 210 werden dann durch eine Konstantfiltereinrichtung 320 ausgeblendet. Dies ist möglich, da sie im Vergleich zu dem erwünschten Haupt- oder Nutzstrahl mit erhöhtem Divergenzwinkel propagieren, sodass sie nach einer gewissen Propagationsstrecke hinreichend räumlich von dem Haupt- oder Nutzstrahl separiert sind und somit durch die Konstantfiltereinrichtung 320, insbesondere durch ein konventionelles Absorptionselement, beseitigt werden können.

Die Ablenkwirkung des Ablenkbereichs 120 ist bei der aus dem Stand der Technik bekannten Ortsfrequenzfiltereinrichtung 100 ortsunabhängig, das heißt überall in dem Ablenkbereich 120 konstant.

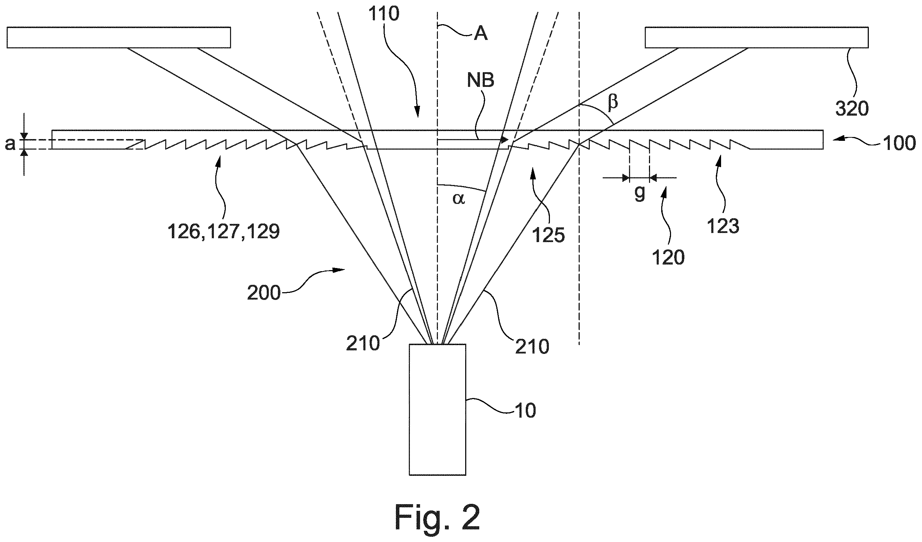

**Fig. 2** zeigt eine schematische Darstellung eines Ausführungsbeispiels einer Ortsfrequenzfiltereinrichtung 100. Gleiche und funktionsgleiche Elemente sind in allen Figuren mit gleichen Bezugszeichen versehen, sodass insoweit jeweils auf die vorhergehende Beschreibung verwiesen wird. Die Ortsfrequenzfiltereinrichtung 100 unterscheidet sich von der bekannten Ortsfrequenzfiltereinrichtung 100 gemäß Figur 1 insbesondere dadurch, dass hier der Ablenkbereich 120 zusätzlich zu einem Konstantabschnitt 123, in dem eine Ablenkwirkung auf die Strahlanteile 210 des Laserstrahls 200 für jeden Ort in dem Konstantabschnitt 123 unabhängig von einem Abstand des Orts von dem Neutralbereich 110 ist, einen Variationsabschnitt 125 aufweist, indem die Ablenkwirkung auf die Strahlanteile 210 des Laserstrahls 200 abhängig von einem Abstand zu dem Neutralbereich 110 variiert. Auf diese Weise ist es insbesondere möglich, auch solche Strahlanteile 210 auszufiltern, die nahe an dem Haupt- oder Nutzstrahl angeordnet sind oder mit dem Haupt- oder Nutzstrahl zu überlappen, ohne dass dabei der Haupt- oder Nutzstrahl unangemessen beeinträchtigt oder nachteilig beeinflusst wird. Die Variation der Ablenkwirkung betrifft dabei insbesondere eine Ablenkeffizienz, insbesondere eine Stärke einer Phasenmodulation. Dagegen ist der Ablenkwinkel bevorzugt ortsunabhängig konstant und insbesondere in dem Konstantabschnitt 123 und dem Variationsabschnitt 125 gleich.

Der Variationsabschnitt 125 ist insbesondere zwischen dem Neutralbereich 110 und dem Konstantabschnitt 123 angeordnet.

Bei dem hier dargestellten Ausführungsbeispiel ist der Neutralbereich 110 zentral angeordnet, wobei sich der Ablenkbereich 120 radial an den Neutralbereich 110 anschließt. Der Ablenkbereich 120 weist dabei den Konstantabschnitt 123 als äußeren Konstantabschnitt und den Variationsabschnitt 125 als inneren Variationsabschnitt auf, wobei der Variationsabschnitt 125 radial innen an den Neutralbereich 110 anschließt, wobei der Konstantabschnitt 123 radial außen an den Variationsabschnitt 125 anschließt. Bevorzugt sind die verschiedenen Bereiche/Abschnitte kreisförmig ausgebildet, wobei der Variationsabschnitt 125 bevorzugt den zentralen Neutralbereich 110 ringförmig umgreift, und wobei wiederum der Konstantabschnitt 123 den Variationsabschnitt 125 radial außen ringförmig umgreift, sodass der Variationsabschnitt 125 als ringförmiger Bereich zwischen dem Neutralbereich 110, der insbesondere kreisscheibenförmig ausgebildet ist, und dem als Außenring ausgebildeten, ringförmigen Konstantabschnitt 123 angeordnet ist.

Es ist aber auch eine inverse Ausgestaltung möglich, bei welcher der Konstantabschnitt 123 des Ablenkbereichs 120 zentral angeordnet ist, an den sich dann unmittelbar radial nach außen der Variationsabschnitt 125 anschließt, wobei sich an diesen wiederum radial nach außen der dann äußere Neutralbereich 110 anschließt.

Die Ablenkwirkung auf die Strahlanteile 210 des Laserstrahls 200 nimmt in dem Variationsabschnitt 125 bevorzugt mit zunehmendem Abstand von dem Neutralbereich 110 zu.

Bevorzugt variiert die Ablenkwirkung auf die Strahlanteile 210 in dem Variationsabschnitt 125 gemäß einer bestimmten Funktion des Abstands von dem Neutralbereich 110, besonders bevorzugt gemäß einer Gauß-Funktion oder gemäß einer linearen Funktion.

Der Ablenkbereich 123 weist bevorzugt eine Phasenbeeinflussungsstruktur 126 auf, die in dem Konstantabschnitt 123 konstant ist und in dem Variationsabschnitt 125 variiert. Besonders bevorzugt beeinflusst die Ortsfrequenzfiltereinrichtung 110 ausschließlich die Phase, jedoch nicht die Intensität oder Amplitude des Laserstrahls 200. Dies hat den Vorteil, dass der Laserstrahl 200 in Strahlausbreitungsrichtung hinter der Ortsfrequenzfiltereinrichtung 100 letztlich die gleiche Intensitätsverteilung - bis auf die gefilterten, unerwünschten Strahlanteile 210 - aufweist, wie vor der Ortsfrequenzfiltereinrichtung 100.

Die Phasenbeeinflussungsstruktur 126 ist bevorzugt als diffraktive Ablenkstruktur 127 ausgebildet, wobei die diffraktive Ablenkstruktur 127 eine Modulationsperiode g aufweist, somit periodisch ist, wobei sie in dem Konstantabschnitt 123 eine konstante Modulationsamplitude a aufweist. In dem Variationsabschnitt 125 variiert dagegen die Modulationsamplitude a der diffraktiven Ablenkstruktur 127. Vorzugsweise variiert die Modulationsamplitude a in dem Variationsabschnitt 125 gemäß einer bestimmten Funktion des Abstands von dem Neutralbereich 110, insbesondere gemäß einer Gauß-Funktion oder gemäß einer linearen Funktion.

Die diffraktive Ablenkstruktur 127 kann insbesondere als geometrisches Gitter ausgebildet sein, oder durch eine örtliche, insbesondere räumliche Variation eines Brechungsindex gebildet.

Die Ortsfrequenzfiltereinrichtung 100 weist bevorzugt einen Filterköper 130 auf, an dem der Neutralbereich 110 ausgebildet ist. Der Ablenkbereich 120 ist bevorzugt auf den Filterkörper 130 aufgebracht oder in den Filterkörper 130 eingebracht.

In Figur 2 ist auch ein Neutralbreitenmaß NB eingezeichnet, welches der Neutralbereich 110 aufweist. Dabei ist das Neutralbreitenmaß NB hier bevorzugt ein Radius des Neutralbereichs 110.

Die Ortsfrequenzfiltereinrichtung 100 ist bevorzugt als Transmissionsblende, als Linse, als Schutzglas, als Faserendkappe, oder als Spiegel ausgebildet. Insbesondere kann die Ortsfrequenzfiltereinrichtung 100 auch in einen Resonator eines den Laserstrahl 200 erzeugenden Lasers integriert, dem Resonator nachgelagert, oder vor oder in einer Bearbeitungsoptik angeordnet sein. Es ist aber auch möglich, dass die Ortsfrequenzfiltereinrichtung 100 als separates Element ausgebildet ist.

Die diffraktive Ablenkstruktur 127 ist bevorzugt so ausgebildet, dass sie keine Beugung nullter Ordnung erzeugt. Bevorzugt ist die diffraktive Ablenkstruktur 127 so ausgebildet, dass sie ausschließlich eine Beugung erster Ordnung erzeugt, insbesondere keine höhere Beugungsordnungen. Gemäß einer bevorzugten Ausgestaltung ist die diffraktive Ablenkstruktur 127 als Blazegitter 129 ausgebildet, oder sie weist ein Blazegitter 129 auf.

Gemäß einer bevorzugten Ausgestaltung ist die diffraktive Ablenkstruktur 127 in den Filterkörper 130 geätzt oder als Volumenmodifikation in den Filterkörper 130 eingebracht, insbesondere als Volumengitter.

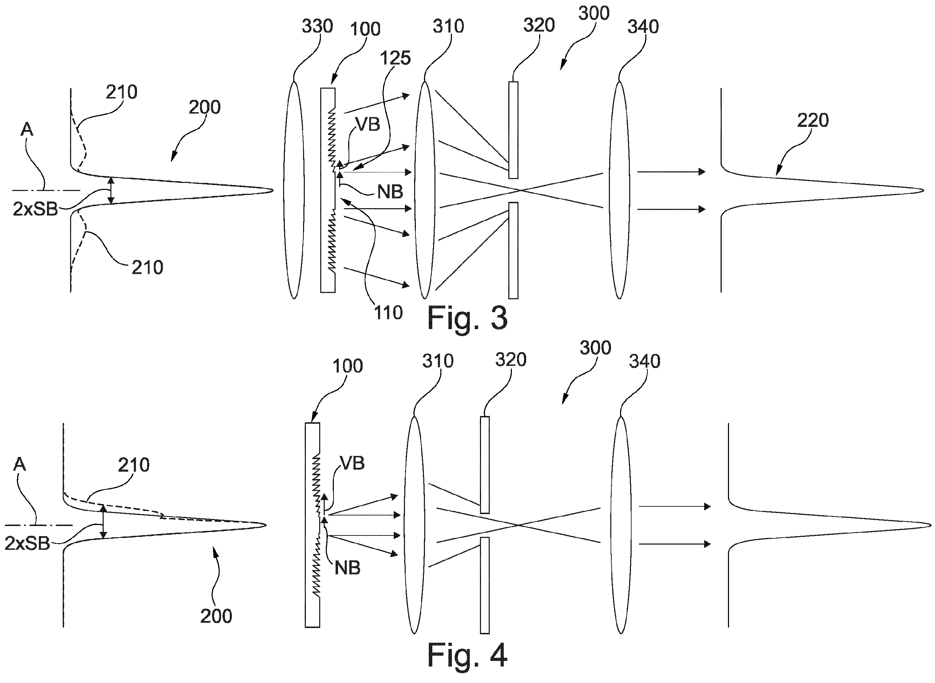

**Fig. 3** zeigt eine schematische Darstellung eines ersten Ausführungsbeispiels einer Ortsfrequenzfilteranordnung 300 für den Laserstrahl 200, wobei die Ortsfrequenzfilteranordnung 300 eine Ortsfrequenzfiltereinrichtung 100 in Übereinstimmung mit der hier offenbarten technischen Lehre aufweist. Dabei ist hier an der Ortsfrequenzfiltereinrichtung 100 dargestellt, dass der Variationsabschnitt 125 ein Variationsbreitenmaß VB aufweist, welches vorzugsweise eine Ringbreite des ringförmigen Variationsabschnitts 125 ist, mit welcher der ringförmige Variationsabschnitt 125 den Neutralbereich 110 ringförmig umgreift.

Weiterhin ist schematisch in Figur 3 ein Strahlbreitenmaß SB des Laserstrahls 200 dargestellt, das ebenfalls als Halbbreitenmaß, hier als Strahlradius ausgebildet ist, wobei konkret in Figur 3 das zweifache Strahlbreitenmaß als Durchmesser des Laserstrahls 200 dargestellt ist. Das Strahlbreitenmaß wird bei dem hier beispielhaft als gaußförmig dargestellten Laserstrahl 200 bevorzugt bei einem Bruchteil von $1/e^2$ einer maximalen Intensität bestimmt.

Das Neutralbreitenmaß NB beträgt bevorzugt von mindestens 5 % bis höchstens 130 % des Strahlbreitenmaßes SB. Das Variationsbreitenmaß VB des Variationsabschnitts 125 beträgt alternativ oder zusätzlich bevorzugt von mindestens 10 % bis höchstens 150 % des Neutralbreitenmaßes NB.

Figur 3 zeigt schematisch eine Situation, in der die unerwünschten Strahlanteile 210 einen vergleichsweise großen Abstand von der Strahlachse A und zugleich von dem Haupt- oder Nutzstrahl aufweisen, sodass sie vergleichsweise leicht ausgefiltert werden können. In einem solchen Fall beträgt das Neutralbreitenmaß NB bevorzugt von mindestens 60 % bis höchstens 100 % des Strahlbreitenmaßes SB. Das Variationsbreitenmaß VB beträgt bevorzugt von mindestens 10 % bis höchstens 40 %, vorzugsweise 30 %, des Neutralbreitenmaßes NB.

Bereits hier sei auf Figur 4 verwiesen, wo - unabhängig von der ansonsten verschiedenen Ausgestaltung des dort dargestellten zweiten Ausführungsbeispiels der Ortsfrequenzfilteranordnung 300 - eine Situation dargestellt ist, in der die unerwünschten Strahlenanteile 210 mit dem Haupt- oder Nutzstrahl überlappen, und somit näher an der Strahlachse A angeordnet sind als gemäß der Situation, die in Figur 3 dargestellt ist. In diesem Fall sind die unerwünschten Strahlanteile schwieriger zu filtern. Das Neutralbreitenmaß NB wird in diesem Fall bevorzugt zu mindestens 20 % bis höchstens 60 % des Strahlbreitenmaßes SB gewählt. Das Variationsbreitenmaß VB beträgt in diesem Fall vorzugsweise von mindestens 40 % bis höchstens 150 %, vorzugsweise 100 %, des Neutralbreitenmaßes NB.

Zurückkommend auf Figur 3 weist die dort dargestellte Ortsfrequenzfilteranordnung 300 in Strahlausbreitungsrichtung des Laserstrahls 200 hinter der Ortsfrequenzfiltereinrichtung 100 - insbesondere von dieser um eine bestimmte Propagationsstrecke beabstandet - die Konstantfiltereinrichtung 320 auf. Sie weist außerdem eine erste Sammellinse 310 auf, die hinter der Ortsfrequenzfiltereinrichtung 100 angeordnet ist. Außerdem ist hier die erste Sammellinse 310 vor der Konstantfiltereinrichtung 320 angeordnet. Es ist alternativ auch möglich, dass die Konstantfiltereinrichtung 320 in die erste Sammellinse 310 integriert oder an der ersten Sammellinse 310 angeordnet ist. Durch den Ablenkbereich 120 abgelenkte unerwünschte Strahlanteile werden nach Durchlaufen der bestimmten Propagationsstrecke von der Konstantfiltereinrichtung 320 beseitigt, insbesondere absorbiert. Auf diese Weise wird insbesondere eine Amplitudenfilterung für den Laserstrahl 200 verwirklicht.

Die Ortsfrequenzfilteranordnung 300 gemäß dem ersten Ausführungsbeispiel nach Figur 3 weist außerdem eine zweite Sammellinse 330 auf, die in Strahlausbreitungsrichtung des Laserstrahls 200 vor der Ortsfrequenzfiltereinrichtung 100 angeordnet ist. Dies erweist sich insbesondere als günstig, wenn der Laserstrahl 200 ein sehr kleines Strahlbreitenmaß SB aufweist, insbesondere aus einem Faserbündel 10 ausgekoppelt wird, wobei er dann durch die zweite Sammellinse 330 aufgeweitet werden kann, sodass die Ortsfrequenzfiltereinrichtung 100 eine größere Strukturgröße, insbesondere eine größere Modulationsperiode g und/oder eine größere Modulationsamplitude a, aufweisen kann, als dies der Fall wäre, wenn der Laserstrahl 200 nicht aufgeweitet würde. Allgemein kann das Strahlbreitenmaß SB mittels der zweiten Sammellinse 330 an einen Außendurchmesser der Ortsfrequenzfiltereinrichtung 100 angepasst, insbesondere verkleinert oder vergrößert werden. Dies erweist sich auch als günstig, wenn das Strahlbreitenmaß SB größer ist als der Außendurchmesser der Ortsfrequenzfiltereinrichtung 100.

Bei dem hier dargestellten ersten Ausführungsbeispiel weist die Ortsfrequenzfilteranordnung 300 außerdem eine dritte Sammellinie 340 auf, die in Strahlausbreitungsrichtung des Laserstrahls 200 hinter der Konstantfiltereinrichtung 320 angeordnet ist. Diese kann vorteilhaft insbesondere dazu verwendet werden, den gefilterten Laserstrahl zu kollimieren. Es resultiert so ein gefilterter, kollimierter Laserstrahl 220 hinter der Ortsfrequenzfilteranordnung 300. Dabei ist schematisch dargestellt, dass dieser gefilterte, kollimierte Laserstrahl 220 die unerwünschten Strahlanteile 210 nicht mehr aufweist.

Der Laserstrahl 200 propagiert in den Figuren 3 und 4 jeweils von links nach rechts durch die Ortsfrequenzfilteranordnungen 300.

**Fig. 4** zeigt eine schematische Darstellung eines zweiten Ausführungsbeispiels einer Ortsfrequenzfilteranordnung 300. Dabei weist das hier dargestellte, zweite Ausführungsbeispiel die zweite Sammellinse 330 nicht auf. Es ist aber auch bei diesem zweiten Ausführungsbeispiel möglich, dass eine solche zweite Sammellinse 330 verwendet wird.

Bevorzugt ist die Ortsfrequenzfiltereinrichtung 100 gemäß einer sogenannten 4f-Anordnung ausgebildet, wobei die Ortsfrequenzfiltereinrichtung 100 sowie die Konstantfiltereinrichtung 320 jeweils in den Fokuslagen beidseitig der ersten Sammellinse 310 angeordnet sind, wobei außerdem die Konstantfiltereinrichtung 320 bevorzugt im Fokus der dritten Sammellinse 340 angeordnet ist.

Bei dem ersten Ausführungsbeispiel gemäß Figur 3 kann zusätzlich die Ortsfrequenzfiltereinrichtung 100 im Fokus der zweiten Sammellinse 330 angeordnet sein. Dies ist aber nicht notwendigerweise so, vielmehr ist auch eine Anordnung außerhalb des Fokus möglich, insbesondere um das Strahlbreitenmaß SB an den Außendurchmesser der Ortsfrequenzfiltereinrichtung 100 anzupassen.

Die Foki der verschiedenen Sammellinsen 310, 330, 340 sind gemäß einer bevorzugten Ausgestaltung gleich ausgebildet, sie können aber auch paarweise verschieden, oder alle voneinander verschieden gewählt sein.

Der Laserstrahl 200 wird bevorzugt gefiltert, indem der Neutralbereich 110 der Ortsfrequenzfiltereinrichtung 100 von dem Laserstrahl 200 durchstrahlt wird, oder indem der Laserstrahl 200 durch den Neutralbereich 110 reflektiert wird. Dabei werden die unerwünschten Strahlanteile 210 in dem radial an den Neutralbereich 110 anschließenden Ablenkbereich 120 von der Strahlachse A abgelenkt, wobei die Strahlanteile 210 in dem Konstantabschnitt 123 mit konstanter Ablenkwirkung unabhängig von dem Abstand von dem Neutralbereich 110 abgelenkt werden, wobei die Strahlanteile 210 in dem Variationsabschnitt 125 in Abhängigkeit von dem Abstand zu dem Neutralbereich 110 mit variierender, insbesondere mit zunehmendem Abstand von dem Neutralbereich 110 steigender Ablenkwirkung abgelenkt werden.

Der Ablenkwinkel $\theta$ des Ablenkbereichs 120 ergibt sich bevorzugt als Arkussinus des Quotienten aus der eingestrahlten Wellenlänge $\lambda$ des Laserstrahls 200 einerseits und der Modulationsperiode g des Ablenkbereichs 120 andererseits, insbesondere gemäß der oben angegebenen Gleichung (1). Näherungsweise ergibt sich der Ablenkwinkel $\theta$ bevorzugt als Quotient aus der eingestrahlten Wellenlänge $\lambda$ dividiert durch die Modulationsperiode g, insbesondere gemäß der oben angegebenen Gleichung (2).

Der Neutralbereich 110 ist bevorzugt in einer Ebene, auf der die Strahlachse A senkrecht steht, geometrisch so geformt, wie es zumindest der idealen Strahlgeometrie des Laserstrahls 200 entspricht, insbesondere kreisförmig für einen zylindersymmetrischen Laserstrahl 200. Er kann aber auch rechteckig - insbesondere für einen rechteckigen Laserstrahlquerschnitt - oder elliptisch - insbesondere für einen elliptischen Laserstrahlquerschnitt - ausgebildet sein. Der Ablenkbereich 120, insbesondere sowohl der Konstantabschnitt 123 als auch der Variationsabschnitt 125, sind bevorzugt geformt wie der Neutralbereich 110 und umgeben diesen radial außen insbesondere als entsprechend ausgebildete Randbereiche.

## Patentansprüche

1. Ortsfrequenzfilteranordnung (300) für einen Laserstrahl (200), mit einer Ortsfrequenzfiltereinrichtung (100), einer ersten Sammellinse (310), die in Strahlausbreitungsrichtung des Laserstrahls (200) hinter der Ortsfrequenzfiltereinrichtung (100) angeordnet ist und einer Konstantfiltereinrichtung (320), wobei die Ortsfrequenzfiltereinrichtung (100) einen Neutralbereich (110) aufweist, der eingerichtet ist, um den Laserstrahl (200) zu transmittieren oder zu reflektieren, sowie einen radial an den Neutralbereich (110) anschließenden Ablenkbereich (120), der eingerichtet ist, um Strahlanteile (210) des Laserstrahls (200) von einer Strahlachse (A) des Laserstrahls (200) abzulenken, wobei der Ablenkbereich (120) einen Konstantabschnitt (123) aufweist, in dem eine Ablenkwirkung auf die Strahlanteile (210) des Laserstrahls (200) für jeden Ort in dem Konstantabschnitt (123) unabhängig von einem Abstand des Orts von dem Neutralbereich (110) ist, wobei der Ablenkbereich (120) einen Variationsabschnitt (125) aufweist, in dem die Ablenkwirkung auf die Strahlanteile (210) des Laserstrahls (200) abhängig von einem Abstand zu dem Neutralbereich (110) variiert, wobei der Neutralbereich (110) zentral angeordnet und von dem Ablenkbereich (120) außen umgriffen ist, wobei der Variationsabschnitt (125) zwischen dem Neutralbereich (110) und dem Konstantabschnitt (123) angeordnet ist, und wobei die Konstantfiltereinrichtung (320) eingerichtet ist, um die von der Ortsfrequenzfiltereinrichtung (100) abgelenkten Strahlanteile (210) des Laserstrahls (200) auszufiltern.

2. Ortsfrequenzfilteranordnung (300) nach Anspruch 1, **dadurch gekennzeichnet, dass** die Ablenkwirkung auf die Strahlanteile (210) des Laserstrahls (200) in dem Variationsabschnitt (125) mit zunehmendem Abstand von dem Neutralbereich (110) zunimmt.

3. Ortsfrequenzfilteranordnung (300) nach einem der vorhergehenden Ansprüche, **dadurch gekennzeichnet, dass** der Ablenkbereich (120) eine Phasenbeeinflussungsstruktur (126) aufweist.

4. Ortsfrequenzfilteranordnung (300) nach einem der vorhergehenden Ansprüche, **dadurch gekennzeichnet, dass** die Phasenbeeinflussungsstruktur (126) als diffraktive Ablenkstruktur (127) ausgebildet ist, wobei die diffraktive Ablenkstruktur (127) periodisch ist und in dem Konstantabschnitt (123) eine konstante Modulationsamplitude (a) aufweist, wobei die Modulationsamplitude (a) der diffraktiven Ablenkstruktur (127) in dem Variationsabschnitt (125) variiert.

5. Ortsfrequenzfilteranordnung (300) nach einem der vorhergehenden Ansprüche, **dadurch gekennzeichnet, dass** die Ablenkwirkung auf die Strahlanteile (210) des Laserstrahls (200) gemäß einer bestimmten Funktion des Abstands von dem Neutralbereich (110) variiert, vorzugsweise gemäß einer Gaußfunktion oder gemäß einer linearen Funktion.

6. Ortsfrequenzfilteranordnung (300) nach einem der vorhergehenden Ansprüche, **dadurch gekennzeichnet, dass** die Ortsfrequenzfiltereinrichtung (100) einen Filterkörper (130) aufweist, an dem der Neutralbereich (110) ausgebildet ist, wobei der Ablenkbereich (120) auf den Filterkörper (130) aufgebracht oder in den Filterkörper (130) eingebracht ist.

7. Ortsfrequenzfilteranordnung (300) nach einem der vorhergehenden Ansprüche, **dadurch gekennzeichnet, dass** der Neutralbereich (110) ein Neutralbreitenmaß (NB) aufweist, wobei

a) das Neutralbreitenmaß (NB) von mindestens 5 % bis höchstens 130 %, vorzugsweise von 20 % bis höchstens 60 %, vorzugsweise von mindestens 60 % bis höchstens 100 %, eines Strahlbreitenmaßes (SB) eines zu filternden Laserstrahls (200) beträgt, und/oder
b) ein Variationsbreitenmaß (VB) des Variationsabschnitts (125) von mindestens 10 % bis höchstens 150 %, vorzugsweise von mindestens 10 % bis höchstens 40 %, vorzugsweise 30%, vorzugsweise von mindestens 40 % bis höchstens 150 %, vorzugsweise 100 %, des Neutralbreitenmaßes (NB) beträgt.

8. Ortsfrequenzfilteranordnung (300) nach einem der vorhergehenden Ansprüche, **dadurch gekennzeichnet, dass** die Ortsfrequenzfiltereinrichtung (100) als Transmissionsblende, als Linse, als Schutzglas, als Faserendkappe, oder als Spiegel ausgebildet ist.

9. Ortsfrequenzfilteranordnung (300) nach einem der vorhergehenden Ansprüche, **dadurch gekennzeichnet, dass** die diffraktive Ablenkstruktur (127) in den Filterkörper (130) geätzt, oder als Volumenmodifikation in den Filterkörper (130) eingebracht ist.

10. Ortsfrequenzfilteranordnung (300) nach einem der vorangehenden Ansprüche, **gekennzeichnet durch** eine zweite Sammellinse (330), die in Strahlausbreitungsrichtung des Laserstrahls (200) vor der Ortsfrequenzfiltereinrichtung (100) angeordnet ist.

11. Verfahren zur Ortsfrequenzfilterung eines Laserstrahls (200), wobei eine Ortsfrequenzfilteranordnung (300) gemäß einem der Ansprüche 1 bis 10 verwendet wird, wobei

a) der Neutralbereich (110) der Ortsfrequenzfiltereinrichtung (100) von dem Laserstrahl (200) durchstrahlt wird, oder
b) der Laserstrahl (200) durch den Neutralbereich (110) der Ortsfrequenzfiltereinrichtung (100) reflektiert wird; wobei
- Strahlanteile (210) des Laserstrahls (200) in dem radial an den Neutralbereich (110) anschließenden Ablenkbereich (120) von einer Strahlachse (A) des Laserstrahls (200) abgelenkt werden, wobei
- die Strahlanteile (210) in dem Konstantabschnitt (123) des Ablenkbereichs (120) mit konstanter Ablenkwirkung unabhängig von einem Abstand von dem Neutralbereich (110) abgelenkt werden, und wobei
- die Strahlanteile (210) in dem Variationsabschnitt (125) des Ablenkbereichs (120) in Abhängigkeit von einem Abstand zu dem Neutralbereich (110) mit variierender Ablenkwirkung abgelenkt werden.

12. Verfahren nach Anspruch 11, **dadurch gekennzeichnet, dass** der Ablenkbereich (120) eine diffraktive Ablenkstruktur (127) aufweist, wobei durch die diffraktive Ablenkstruktur (127) eine nullte Beugungsordnung unterdrückt wird.

**Claims**

1. A spatial frequency filter arrangement (300) for a laser beam (200), with a spatial frequency filter device (100), a first collecting lens (310) which is arranged in the beam propagation direction of the laser beam (200) behind the spatial frequency filter device (100), and a constant filter device (320), wherein the spatial frequency filter device (100) has a neutral region (110) which is configured to transmit or reflect the laser beam (200) and a deflection region (120) radially adjacent to the neutral region (110), which is configured to deflect beam portions (210) of the laser beam (200) from a beam axis (A) of the laser beam (200), wherein the deflection region (120) has a constant section (123) in which a deflection effect on the beam portions (210) of the laser beam (200) is independent of a distance from the neutral region (110) for each location in the constant section (123), wherein the deflection region (120) has a variation section (125) in which the deflection effect on the beam portions (210) of the laser beam (200) varies as a function of a distance from the neutral region (110), wherein the neutral region (110) is arranged centrally and is surrounded on the outside by the deflection region (120), wherein the variation section (125) is arranged between the neutral region (110) and the constant section (123), and wherein the constant filter device (320) is configured to filter out the beam portions (210) of the laser beam (200) deflected by the spatial frequency filter device (100).

2. The spatial frequency filter arrangement (300) according to claim 1, **characterized in that** the deflection effect on the beam portions (210) of the laser beam (200) in the variation section (125) increases with an increasing distance from the neutral region (110).

3. The spatial frequency filter arrangement (300) according to any one of the preceding claims, **characterized in that** the deflection region (120) has a phase influencing structure (126).

4. The spatial frequency filter arrangement (300) according to any one of the preceding claims, **characterized in that** the phase influencing structure (126) is designed as a diffractive deflection structure (127), wherein the diffractive deflection structure (127) is periodic and has a constant modulation amplitude (a) in the constant section (123), wherein the modulation amplitude (a) of the diffractive deflection structure (127) varies in the variation section (125).

5. The spatial frequency filter arrangement (300) according to any one of the preceding claims, **characterized in that** the deflection effect on the beam portions (210) of the laser beam (200) varies according to a specific function of the distance from the neutral region (110), preferably according to a Gaussian function or according to a linear function.

6. The spatial frequency filter arrangement (300) according to any one of the preceding claims, **characterized in that** the spatial frequency filter device (100) has a filter body (130) on which the neutral region (110) is designed, wherein the deflection region (120) is applied to the filter body (130) or inserted into the filter body (130).

7. The spatial frequency filter arrangement (300) according to any one of the preceding claims, **characterized in that** the neutral region (110) has a neutral width size (NB), wherein

   a) the neutral width size (NB) is at least 5% to at most 130%, preferably from 20% to at most 60%, preferably from at least 60% to at most 100%, of a beam width (SB) of a laser beam (200) to be filtered, and/or
   b) a variation width size (VB) of the variation section (125) of at least 10% to at most 150%, preferably at least 10% to at most 40%, preferably 30%, preferably from at least 40% to at most 150%, preferably 100%, of the neutral width size (NB).

8. The spatial frequency filter arrangement (300) according to any one of the preceding claims, **characterized in that** the spatial frequency filter device (100) is designed as a transmission aperture, as a lens, as a protective glass, as a fiber end cap, or as a mirror.

9. The spatial frequency filter arrangement (300) according to any one of the preceding claims, **characterized in that** the diffractive deflection structure (127) is etched into the filter body (130) or introduced into the filter body (130) as a volume modification.

10. The spatial frequency filter arrangement (300) according to any one of the preceding claims, **characterized in that** a second collecting lens (330) is arranged in the beam propagation direction of the laser beam (200) in front of the spatial frequency filter device (100).

11. A method for spatial frequency filtering of a laser beam (200), wherein a spatial frequency filter arrangement (300) according to one of claims 1 to 10 is used, wherein

   a) the neutral region (110) of the spatial frequency filter device (100) is irradiated by the laser beam (200), or
   b) the laser beam (200) is reflected through the neutral region (110) of the spatial frequency filter device (100); wherein
   - beam portions (210) of the laser beam (200) in the deflection region (120) radially adjacent to the neutral region (110) are deflected from a beam axis (A) of the laser beam (200), wherein
   - the beam portions (210) in the constant section (123) of the deflection region (120) are deflected with a constant deflection effect independently of a distance from the neutral region (110), and wherein
   - the beam portions (210) in the variation section (125) of the deflection region (120) are deflected with a varying deflection effect as a function of a distance from the neutral region (110).

12. The method according to claim 11, **characterized in that** the deflection region (120) has a diffractive deflection structure (127), wherein a zeroth diffraction order is suppressed by the diffractive deflection structure (127).

**Revendications**

1. Agencement de filtre de fréquence spatiale (300) pour un faisceau laser (200), comprenant un dispositif de filtre de fréquence spatiale (100), une première lentille convergente (310) agencée derrière le dispositif de filtre de fréquence spatiale (100) dans la direction de propagation du faisceau laser (200), et un dispositif de filtre constant (320), dans lequel le dispositif de filtre de fréquence spatiale (100) comporte une zone neutre (110) qui est configurée pour transmettre ou réfléchir le faisceau laser (200), ainsi qu'une zone de déflexion (120) radialement adjacente à la zone neutre (110) qui est configurée pour défléchir les composantes de faisceau (210) du faisceau laser (200) d'un axe de faisceau (A) du faisceau laser (200), dans lequel la zone de déflexion (120) présente une section constante (123) où un effet de déflexion sur les composantes de faisceau (210) du faisceau laser (200) pour chaque point spatial dans la section constante (123) est indépendant de la distance du point spatial à la zone neutre (110), dans lequel la zone de déflexion (120) présente une section de variation (125) où l'effet de déflexion sur les composantes de faisceau (210) du faisceau laser (200) varie en fonction de la distance à la zone neutre (110), dans lequel la zone neutre (110) est agencée au centre et est entourée extérieurement par la zone de déflexion (120), dans lequel la section de variation (125) est agencée entre la zone neutre (110) et la section constante (123), et dans lequel le dispositif de filtre constant (320) est configuré pour filtrer les composantes de faisceau (210) du faisceau laser (200) défléchis par le dispositif de filtre de fréquence spatiale (100).

2. Agencement de filtre de fréquence spatiale (300) selon la revendication 1, **caractérisé en ce que** l'effet de déflexion sur les composantes de faisceau (210) du faisceau laser (200) dans la section de variation (125) augmente avec la distance à la zone neutre (110).

3. Agencement de filtre de fréquence spatiale (300) selon l'une des revendications précédentes, **caractérisé en ce que** la zone de déflexion (120) présente une structure d'influence de phase (126).

4. Agencement de filtre de fréquence spatiale (300) selon l'une des revendications précédentes, **caractérisé en ce que** la structure d'influence de phase (126) est conformée comme une structure de déflexion diffractive (127), dans lequel la structure de déflexion diffractive (127) est périodique et présente une amplitude de modulation (a) constante dans la section constante (123), dans lequel l'amplitude de modulation (a) de la structure de déflexion diffractive (127) varie dans la section de variation (125).

5. Agencement de filtre de fréquence spatiale (300) selon l'une des revendications précédentes, **caractérisé en ce que** l'effet de déflexion sur les composantes de faisceau (210) du faisceau laser (200) varie selon une fonction déterminée de la distance à la zone neutre (110), de préférence selon une fonction gaussienne ou selon une fonction linéaire.

6. Agencement de filtre de fréquence spatiale (300) selon l'une des revendications précédentes, **caractérisé en ce que** le dispositif de filtre de fréquence spatiale (100) comporte un corps de filtre (130) sur lequel est conformée la zone neutre (110), dans lequel la zone de déflexion (120) est appliquée sur le corps de filtre (130) ou introduite dans le corps de filtre (130).

7. Agencement de filtre de fréquence spatiale (300) selon l'une des revendications précédentes, **caractérisé en ce que** la zone neutre (110) présente une dimension de largeur neutre (NB), dans lequel

   a) la dimension de largeur neutre (NB) est d'au moins 5 % à au plus 130 %, de préférence de 20 % à au plus 60 %, de préférence d'au moins 60 % à au plus 100 %, d'une dimension de largeur de faisceau (SB) d'un faisceau laser (200) à filtrer, et/ou
   b) une dimension de largeur de variation (VB) de la section de variation (125) est d'au moins 10 % à au plus 150 %, de préférence d'au moins 10 % à au plus 40 %, de préférence 30 %, de préférence d'au moins 40 % à au plus 150 %, de préférence 100 %, de la dimension de largeur neutre (NB).

8. Agencement de filtre de fréquence spatiale (300) selon l'une des revendications précédentes, **caractérisé en ce que** le dispositif de filtre de fréquence spatiale (100) est conformé comme un diaphragme de transmission, comme une lentille, comme un verre de protection, comme un capuchon d'extrémité de fibre ou comme un miroir.

9. Agencement de filtre de fréquence spatiale (300) selon l'une des revendications précédentes, **caractérisé en ce que** la structure de déflexion diffractive (127) est gravée dans le corps de filtre (130) ou est appliquée dans le corps de filtre (130) sous forme d'une modification de volume.

10. Agencement de filtre de fréquence spatiale (300) selon l'une des revendications précédentes, **caractérisé par** une deuxième lentille convergente (330) qui est agencée devant le dispositif de filtre de fréquence spatiale (100) dans la direction de propagation du faisceau laser (200).

11. Procédé de filtrage de fréquence spatiale d'un faisceau laser (200), dans lequel est utilisé un agencement de filtre de fréquence spatiale (300) selon l'une des revendications 1 à 10, dans lequel

a) la zone neutre (110) du dispositif de filtre de fréquence spatiale (100) est irradiée par le faisceau laser (200), ou

b) le faisceau laser (200) est réfléchi par la zone neutre (110) du dispositif de filtre de fréquence spatiale (100) ; dans lequel

- les composantes de faisceau (210) du faisceau laser (200) sont défléchies d'un axe de faisceau (A) du faisceau laser (200) dans la zone de déflexion (120) radialement adjacente à la zone neutre (110), dans lequel

- les composantes de faisceau (210) sont défléchies dans la section constante (123) de la zone de déflexion (120) avec un effet de déflexion constant indépendamment de la distance à la zone neutre (110), et dans lequel

- les composantes de faisceau (210) dans la section de variation (125) de la zone de déflexion (120) sont défléchies avec un effet de déflexion variable en fonction d'une distance à la zone neutre (110).

12. Procédé selon la revendication 11, **caractérisé en ce que** la zone de déflexion (120) présente une structure de déflexion diffractive (127), dans lequel un ordre de diffraction zéro est supprimé par la structure de déflexion diffractive (127).

Fig. 1
Stand der Technik

Fig. 2

EP 3 956 701 B1

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004058044 A1
- DE 102011102355 A1

**In der Beschreibung aufgeführte Nicht-Patentliteratur**

- Patterning of circular structure arrays with interference lithography. **SOLAK H H et al.** JOURNAL OF VACUUM SCIENCE & TECHNOLOGY B: MICROELECTRONICSPROCESSING AND PHENOMENA. AMERICAN VACUUM SOCIETY, 01 November 2003, vol. 21, 2883-2887
- **FARN, M. W.** Binary gratings with increased efficiency. *Appl. Opt.*, 1992, vol. 31 (22), 4453-4458
- **NGCOBO, S. et al.** A digital laser for on-demand laser modes. *Nat. Commun.*, 2013, vol. 4, 2289
- **ECKSTEIN W. et al.** Comparison of different simulation methods for effective medium computer generated holograms. *Opt. Express*, 2013, vol. 21 (10), 12424-12433